# EUROPÄISCHE PATENTSCHRIFT

(11) **EP 3 095 943 B1**
(45) Veröffentlichungstag und Bekanntmachung des Hinweises auf die Patenterteilung: **30.12.2020**
(21) Anmeldenummer: 16159957.6
(22) Anmeldetag: 11.03.2016
(51) Int. Cl.: E06B 1/02

(54) **STÜTZ- UND ISOLIERELEMENT ZUR ABSTÜTZUNG UND ISOLIERUNG EINES FENSTERRAHMENS**
SUPPORT AND INSULATION ELEMENT FOR SUPPORT AND INSULATION OF A WINDOW FRAME
ÉLÉMENT DE SUPPORT ET D'ISOLATION EN FORME DE BANDE POUR LE SUPPORT ET L'ISOLATION D'UN CADRE DE FENÊTRE

(30) Priorität: 18.05.2015 EP 15168003
(43) Veröffentlichungstag der Anmeldung: 23.11.2016
(73) Patentinhaber: ISO-Chemie GmbH, 73431 Aalen (DE)
(72) Erfinder:
(74) Vertreter: Wächter, Jochen

(56) Entgegenhaltungen:
- DE-U1-202012 008 857

## Beschreibung

Die Erfindung betrifft einen Bauwerksabschnitt mit einem Fensterrahmen sowie ein Verfahren zur Anordnung eines Fensterrahmens in einem Bauwerksabschnitt. Der erfindungsgemäße Bauwerksabschnitt umfasst eine Wand und mindestens ein seitlich von der Wand angeordnetes Stütz- und Isolierelement zur Abstützung und Isolierung des Fensterrahmens, wobei das Stütz- und Isolierelement ein Stützteil und ein Isolierteil umfasst.

Derartige Stütz- und Isolierelemente werden seit einigen Jahren in Verbindung mit Wärmedämmverbundsystemen verwendet, um eine Wandöffnung für ein Fenster künstlich nach außen, in die Wärmedämmebene oder Luftschichtebene, hin zu verlängern. Die DE 20 2012 008 857 U1 offenbart beispielsweise ein Vorwandmontagesystem zur Montage von Elementen in einer Dämmstoffschicht gemäß dem Oberbegriff des Anspruchs 1. Gemäß EP 2 639 394 A2 wird ein Stützteil aus Last tragendem Hartschaumstoff seitlich an der Wand verschraubt und dient, insbesondere an der Unterseite, der Abstützung des einzusetzenden Fensterrahmens. In diesem Wärmedämmverbundsystem bildet z.B. eine Vorwand mit der inneren Wand einen Zwischenraum, in dem das Stützteil angeordnet ist. Das Last tragende Stützteil mit mehr oder weniger dreieckigem Querschnitt wird durch ein Isolierteil ergänzt, das beispielsweise aus hartem Weichschaum besteht und gemeinsam mit dem Stützteil einen zweiteiligen Körper mit vorzugsweise quaderförmigem Querschnitt bildet. Das Isolierteil muss nach der Verschraubung des Stützteils an der inneren Wand gesondert mit dem Stützteil verbunden werden.

Der vorliegenden Erfindung liegt die Aufgabe zugrunde, einen Bauwerksabschnitt mit einem Stütz- und Isolierelement zu schaffen, das einen besonders einfachen Transport und Einbau ermöglicht, sowie ein entsprechendes Verfahren zum Anordnen eines Fensterrahmens in einem solchen Bauwerksabschnitt anzugeben.

Diese Aufgabe wird durch die Merkmale des Anspruchs 1 bzw. des Anspruchs 10 gelöst.

Erfindungsgemäß umfasst ein Bauwerksabschnitt ein Stütz- und Isolierelement zur Abstützung und Isolierung eines Fensterrahmens. Das Stütz- und Isolierelement umfasst ein Stützteil mit einem ersten Schenkel, der eine erste Seitenfläche aufweist, mit einem zweiten Schenkel, der auf der der ersten Seitenfläche gegenüberliegenden Seite vom ersten Schenkel abragt, und einem dritten Schenkel, der, beabstandet vom zweiten Schenkel, auf der der ersten Seitenfläche gegenüberliegenden Seite vom ersten Schenkel abragt. Das Stützteil ist aus einem tragfähigen Material gebildet. Weiterhin umfasst das Stütz- und Isolierelement ein Isolierteil, das zumindest an der der ersten Seitenfläche abgewandten Seite des ersten Schenkels des Stützteils angeordnet ist und aus verdichteter Mineralwolle oder aus einem Hartschaum gebildet ist. Das Isolierteil weist zwei

Einschnitte auf, in die der zweite Schenkel und der dritte Schenkel des Stützteils eingeführt sind, wobei das Isolierteil den zweiten Schenkel und den dritten Schenkel des Stützteils jeweils an drei Seiten umgibt.

Auf diese Weise wird ein Stütz- und Isolierelement geschaffen, mit dem eine optimale Isolierwirkung erzielt wird und das gleichzeitig einfach aufgebaut und leicht zu installieren ist. Außerdem kann durch diese Ausgestaltung das Isolierteil auf einfache Weise auf den zweiten und dritten Schenkel des Stützteils aufgesteckt werden. Außerdem wird durch die Ausgestaltung des Stützteils mit den drei Schenkeln eine besonders gute Versteifung des Stützteils erzielt.

In einer bevorzugten Ausführungsform umgibt das Isolierteil den zweiten Schenkel und den dritten Schenkel des Stützteils an den drei Seiten jeweils im Wesentlichen vollständig. Auf diese Weise kann auf zusätzliche Isoliermaßnahmen verzichtet werden.

In einer bevorzugten Ausgestaltung ist das Isolierteil einstückig. Dies erleichtert die Handhabung und den Einbau des Stütz- und Isolierelements. Außerdem ist auf diese Weise die Isolierwirkung ohne weitere Maßnahmen sichergestellt.

Vorzugsweise sind der erste, zweite und dritte Schenkel des Stützteils aus Metall, bevorzugt Stahl oder Aluminium, gebildet. Dies sichert die Lastabtragung und sorgt für eine kostengünstige Herstellung.

In einer bevorzugten Ausführungsform weisen der zweite und dritte Schenkel des Stützteils eine Dicke im Bereich von 0,5 bis 20 mm, vorzugsweise von 1 bis 15 mm auf. Hierdurch ist zum einen eine sichere Befestigung des Fensterrahmens gewährleistet, während gleichzeitig das Aufstecken des Isolierteils auf das Stützteil auf einfache Weise ermöglicht wird. Vorzugsweise ist die Dicke des zweiten und dritten Schenkels über ihren Verlauf gleichbleibend. Bevorzugt kann der zweite Schenkel dieselbe Dicke aufweisen wie der dritte Schenkel.

Bevorzugt ragt der zweite Schenkel unter einem rechten Winkel vom ersten Schenkel ab, und der dritte Schenkel ragt parallel zum zweiten Schenkel vom ersten Schenkel ab. Auf diese Weise kann das Isolierteil leicht auf den zweiten und dritten Schenkel des Stützteils aufgesteckt werden und wird dort vorzugsweise durch Reibungsklemmung von selbst gehalten.

In einer bevorzugten Ausführungsform weist das Stützteil weiterhin einen Stützblock auf, der im Bereich der ersten Seitenfläche angeordnet ist und zur Anlage an der Wand dient. Auf diese Weise kann der Fensterrahmen mit einem noch größeren Versatz bezüglich der Wand eingebaut werden.

Ein erfindungsgemäßer Bauwerksabschnitt umfasst eine Wand und mindestens ein seitlich von der Wand angeordnetes Stütz- und Isolierelement gemäß der oben beschriebenen Gestaltung. Der erste Schenkel des Stützteils ist dabei mittels mindestens eines Befestigungselements mit der Wand verschraubt. Ein Fensterrahmen ist unter Zwischenschaltung zumindest eines Abschnitts des Isolierteils mit dem zweiten Schenkel und dem dritten Schenkel des Stützteils mittels mindestens eines Schraubelements verschraubt.

Hierdurch wird eine sichere Lastabtragung des Gewichts des Fensters erzielt, während gleichzeitig eine optimale Isolierung zwischen Fensterrahmen und Mauerwerk gewährleistet wird.

Das erfindungsgemäße Verfahren zur Anordnung eines Fensterrahmens an einer Wand eines Bauwerksabschnitts umfasst folgende Schritte:
- Bereitstellen mindestens eines Stützteils und mindestens eines Isolierteils, wobei das mindestens eine Stützteil einen ersten Schenkel, der eine erste Seitenfläche aufweist, einen zweiten Schenkel, der auf der der ersten Seitenfläche gegenüberliegenden Seite vom ersten Schenkel abragt, und einen dritten Schenkel, der, beabstandet vom zweiten Schenkel, auf der der ersten Seitenfläche gegenüberliegenden Seite vom ersten Schenkel abragt, aufweist, wobei das mindestens eine Stützteil aus einem tragfähigen Material gebildet ist, wobei das Isolierteil aus verdichteter Mineralwolle oder aus einem Hartschaum gebildet ist, und wobei das mindestens eine Isolierteil zwei Einschnitte aufweist,
- Verschrauben des ersten Schenkels des mindestens einen Stützteils an der Wand mittels mindestens eines Befestigungselements,
- Aufsetzen des mindestens einen Isolierteils auf das mindestens eine Stützteil derart, dass der zweite und dritte Schenkel des mindestens einen Stützteils in die zwei Einschnitte des mindestens einen Isolierteils eindringen, sodass das mindestens eine Isolierteil zumindest an der der ersten Seitenfläche abgewandten Seite des ersten Schenkels des mindestens einen Stützteils angeordnet ist und den zweiten und dritten Schenkel des mindestens einen Stützteils jeweils an drei Seiten umgibt, und
- Verschrauben des Fensterrahmens unter Zwischenschaltung zumindest eines Abschnitts des Isolierteils mit dem zweiten Schenkel und dem dritten Schenkel des Stützteils des mindestens einen Stütz- und Isolierelements.

Dieses Verfahren ist besonders anwenderfreundlich und mit geringem Aufwand zu bewerkstelligen. Zudem wird durch die doppelte Verschraubung des Fensterrahmens am zweiten und dritten Schenkel des Stützteils mit geringem Materialeinsatz eine hervorragende Sicherung gegen ein Kippen des Schraubelements erzielt.

Bevorzugt ist es hierbei, wenn das mindestens eine Isolierteil mit dem mindestens einen Stützteil verklebt wird. Dies dient der sicheren Verbindung von Isolierteil und Stützteil.

Ebenfalls bevorzugt ist es, wenn das mindestens eine Isolierteil mit der Wand verklebt wird. Hierdurch wird der Zusammenhalt des Stütz- und Isolierelements weiter unterstützt und idealerweise eine Luftdichtheit der Gesamtkonstruktion zum Baukörper erzielt.

Weitere Vorteile und Eigenschaften des erfindungsgemäßen Stütz- und Isolierelements ergeben sich aus der nachfolgenden Beschreibung unter Bezugnahme auf die Zeichnungen.
- Fig. 1: ist eine schematische Perspektivansicht eines Ausschnitts einer Fensteröffnung in einem Mauerwerk mit mehreren um die Fensteröffnung herum platzierten Stütz- und Isolierelementen gemäß der Erfindung;
- Fig. 2: ist eine schematische Perspektivansicht eines Bauwerksabschnitts mit einem daran angebrachten erfindungsgemäßen Stütz- und Isolierelement, wobei zum Zwecke der besseren Darstellung das Isolierteil in einem rechten Abschnitt des Stütz- und Isolierelements weggelassen wurde;
- Fig. 3: ist eine Querschnittsansicht der Ausführungsform des erfindungsgemäßen Stütz- und Isolierelements aus Fig. 1 und 2 im Einbauzustand;
- Fig. 4 und 5: sind Querschnittsansichten weiterer Ausführungsformen des erfindungsgemäßen Stütz- und Isolierelements im Einbauzustand;
- Fig. 6: ist eine Perspektivansicht einer weiteren Ausführungsform des erfindungsgemäßen Stütz- und Isolierelements; und
- Fig. 7: ist eine Querschnittsansicht des Stütz- und Isolierelements aus Fig. 6 im eingebauten Zustand mit Wand und Fensterrahmen.

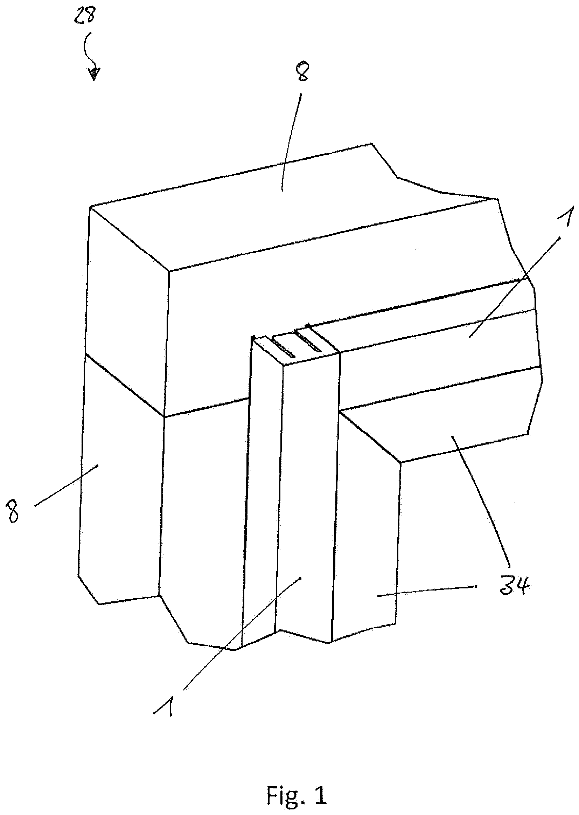

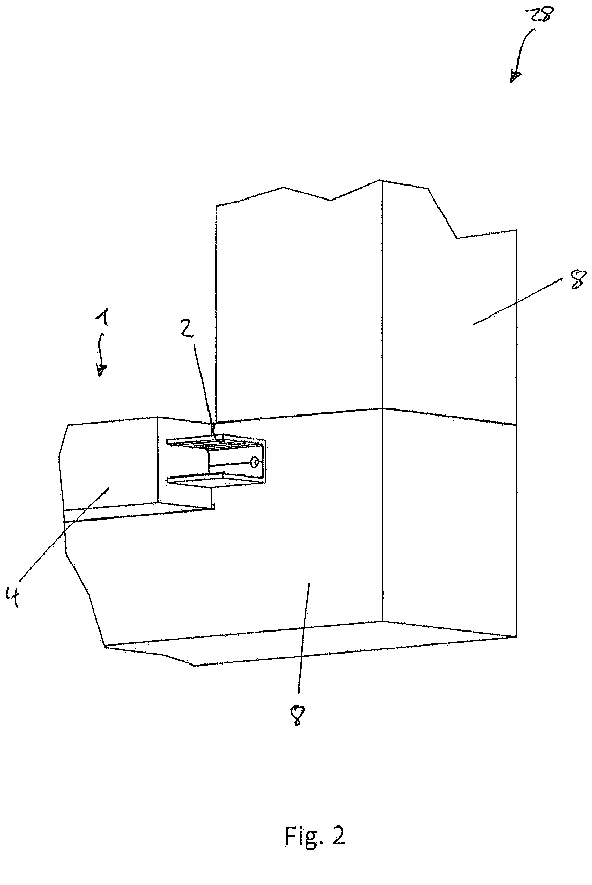

In Fig. 1 und 2 ist die Einbausituation eines erfindungsgemäßen Stütz- und Isolierelements 1 skizziert, wobei in Fig. 2 der abgestützte Fensterrahmen 34 nicht dargestellt ist.

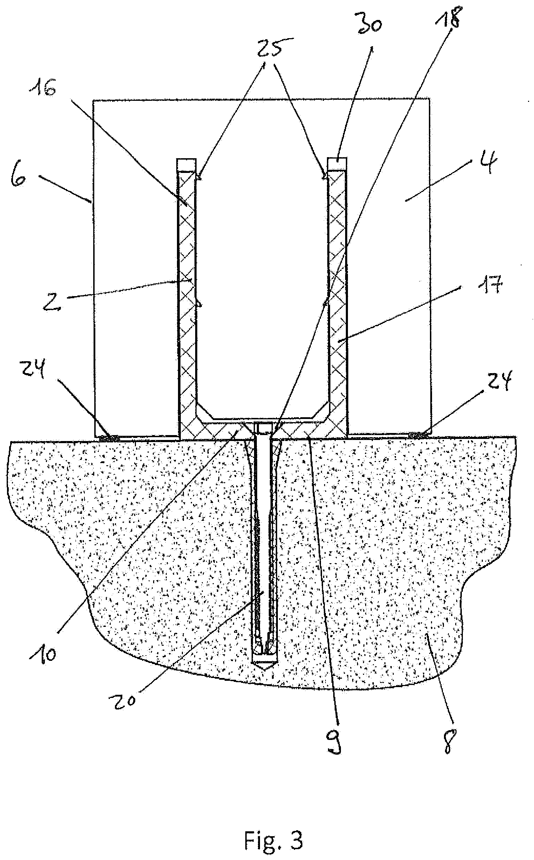

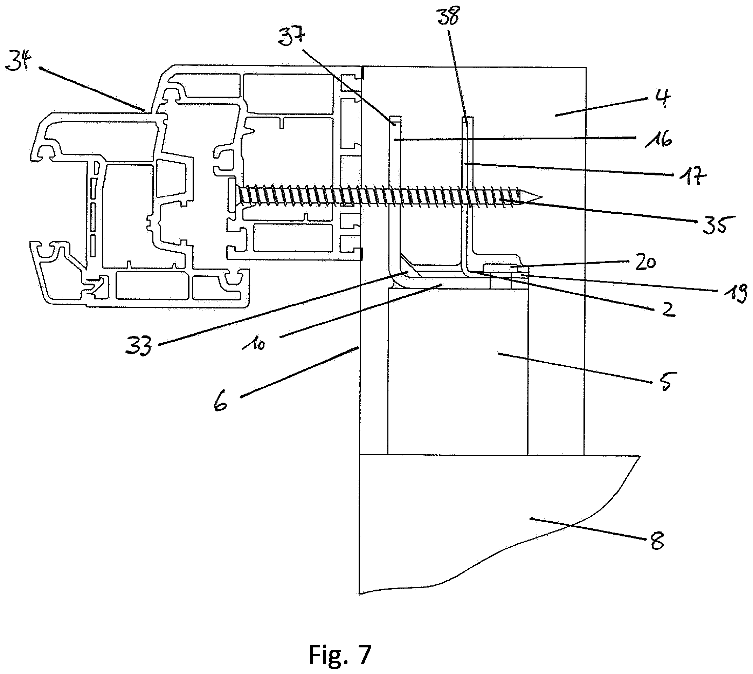

Der dargestellte Bauwerksabschnitt 28 umfasst neben der Wand 8, an der das Stützteil 2 befestigt ist, zumeist noch eine Vorwand (nicht dargestellt), die in der Regel durch ein Wärmedämmmaterial gebildet ist. Diese Vorwand wird entweder ohne Zwischenraum direkt an der Wand 8 befestigt, oder sie ist hinterlüftet und in dem Zwischenraum zwischen Wand 8 und Vorwand ist das erfindungsgemäße Stütz- und Isolierelement 1 angeordnet. Der Fensterrahmen 34 (Fig. 1; Fig. 7) stützt sich an dem mindestens einen Stütz- und Isolierelement 1 ab, genauer gesagt auf einer Seitenfläche 6 des Stütz- und Isolierelements 1, die in der Regel eine Seitenfläche des Isolierteils 4 ist (siehe Fig. 3 bis 7). Wie aus Fig. 7 hervorgeht, ist der Fensterrahmen 34 grundsätzlich mittels mindestens eines Schraubelements 35 mit dem Stütz- und Isolierelement 1 verschraubt.

Wie aus Fig. 1 und 2 hervorgeht, können die Stütz- und Isolierelemente 1 um die gesamte Fensteröffnung herum angeordnet sein (es sind jeweils nur zwei von vier Seiten der Fensteröffnung abschnittsweise dargestellt). Es können aber auch nur unterhalb der Fensteröffnung ein oder mehrere Stütz- und Isolierelemente 1 angebracht sein, da dort die hauptsächliche Gewichtslast des Fensters aufliegt.

Das eine oder die mehreren Stütz- und Isolierelemente 1 werden mittels Befestigungselementen 20, konkret Schrauben, mit der Wand verschraubt (siehe Fig. 3 bis 7). Zusätzlich kann auch eine Klebeverbindung zwischen Stützteil 2 und Wand 8 vorhanden sein.

Bei der Einbausituation gemäß Fig. 1 und 2 entspricht die Länge eines Stütz- und Isolierelements 1 im Wesentlichen der entsprechenden Länge bzw. Breite der Fensteröffnung. Allerdings können pro Seite der Fensteröffnung auch mehrere Stütz- und Isolierelemente 1 aneinandergereiht werden. Beispielsweise werden die einzelnen Stütz- und Isolierelemente 1 so zugeschnitten, dass sie stumpf aneinander stoßen. Dort sind dann vorzugsweise zumindest die jeweiligen Isolierteile 4 miteinander verklebt. Denkbar ist auch eine Steckverbindung oder Schwalbenschwanzverbindung.

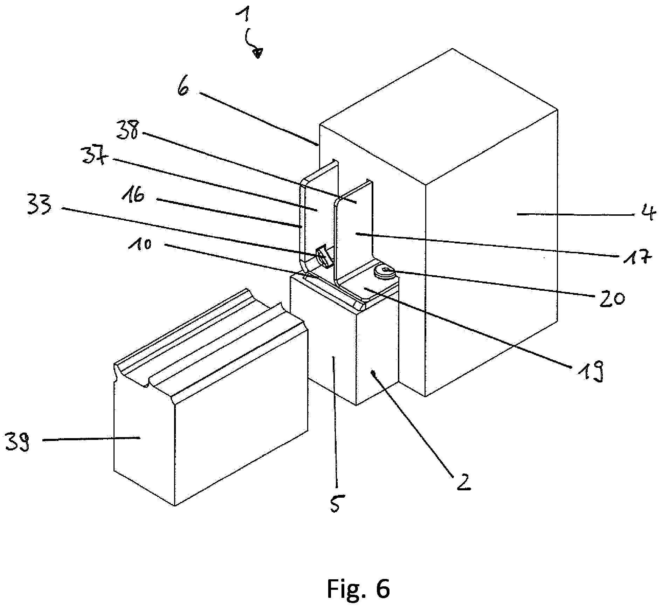

Es ist aber auch denkbar und in vielen Fällen sogar vorteilhaft, dass die einzelnen Stütz- und Isolierelemente 1 nicht aneinanderstoßen, sondern Zwischenräume zwischen ihnen freibleiben, die mit anderen Materialien, z.B. Isoliermaterialien, aufgefüllt werden. Außerdem kann es kostengünstiger sein, wenn das Stützteil 2 nur an den für die Lastabtragung des Fensters benötigten Befestigungspunkten angeordnet ist, während das Isolierteil 4 oder ein anderes Isoliermaterial ohne Unterbrechung entlang des Rahmenprofils angeordnet ist. Auf derartige Ausgestaltungen wird unter Bezugnahme auf Fig. 6 näher eingegangen.

Details der einzelnen Ausführungsformen der erfindungsgemäßen Stütz- und Isolierelemente 1 werden nun unter Bezugnahme auf Fig. 3 bis 7 näher beschrieben.

Es sei vorab darauf hingewiesen, dass die Ausrichtung der Stütz- und Isolierelemente 1 in Fig. 3 bis 7 jeweils immer um 90° gedreht zur eigentlichen Einbausituation dargestellt ist. Die Seitenfläche 6, auf der der Fensterrahmen 34 abgestützt ist, verdeutlicht in allen Figuren die Ausrichtung des Stütz- und Isolierelements 1.

In Fig. 3 ist eine erste Ausführungsform des erfindungsgemäßen Stütz- und Isolierelements 1 zur Abstützung und Isolierung eines Fensterrahmens 34 dargestellt, die auch in Fig. 1 und 2 abgebildet ist.

Das Stütz- und Isolierelement 1 umfasst ein im Querschnitt U-förmiges Stützteil 2, mit dem ein im Querschnitt im Wesentlichen rechteckiges Isolierteil 4 verbunden ist. Sowohl Stützteil 2 als auch Isolierteil 4 erstrecken sich in erster Linie in einer Längsrichtung. Die Länge eines Stütz- und Isolierelements 1 in Längsrichtung kann dabei frei gewählt werden und liegt vorzugsweise zwischen 2 und 600 cm. Das Stützteil 2 ist vorzugsweise einstückig ausgebildet. Das Stützteil 2 ist aus einem tragfähigen Material gebildet, das dazu geeignet ist, die Last des Fensters zu tragen, ohne sich dabei zu verformen. Holz, Kunststoff oder ein Hartschaummaterial kann als Material des Stützteils 2 verwendet werden. Bevorzugt und für bestimmte Elemente (z.B. erster Schenkel 10 und zweiter Schenkel 16) des Stützteils 2 besonders vorteilhaft ist aber ein Metall, beispielsweise Stahl oder Aluminium.

Das Stützteil 2 weist eine in Längsrichtung verlaufende erste Seitenfläche 9 auf, die der Wand 8 zugewandt ist und im dargestellten Beispielsfall zur Anlage an der Wand 8 dient (Fig. 3). Die erste Seitenfläche 9 ist Teil eines ersten Schenkels 10 des Stützteils 2. Im ersten Schenkel 10 können eine oder vorzugsweise mehrere Durchgangsbohrungen 18 vorgesehen sein, die zum Durchtritt eines oder mehrerer Befestigungselemente 20 (Fig. 3) dienen. Jede Durchgangsbohrung 18 verläuft somit durch den ersten Schenkel 10 des Stützteils 2 von einer inneren Seitenfläche, die der ersten Seitenfläche 9 gegenüberliegt, zur ersten Seitenfläche 9. Wie aus Fig. 3 hervorgeht, dient jedes Befestigungselement 20 zur Verschraubung des Stützteils 2 und somit des Stütz- und Isolierelements 1 an der Wand 8.

Ebenso ist es möglich, dass keine Durchgangsbohrung 18 im ersten Schenkel 10 des Stützteils 2 vorgesehen ist, sondern die Durchgangsbohrung erst vor Ort durch den Handwerker in das Stützteil 2 eingebracht wird.

Der zweite Schenkel 16 des Stützteils 2 ragt unter einem rechten Winkel vom ersten Schenkel 10 ab und erstreckt sich im Einbauzustand vom Schenkel 10 aus weg von der Wand 8.

Außerdem weist das Stützteil 2 einen dritten Schenkel 17 auf, der parallel zum zweiten Schenkel 16, und beabstandet vom zweiten Schenkel 16, vom ersten Schenkel 10 abragt. Der dritte Schenkel 17 ist im dargestellten Beispielsfall genauso lang wie der zweite Schenkel 16, kann aber auch eine andere Länge aufweisen. Die Dicke des dritten Schenkels 17 ist im dargestellten Beispielsfall außerdem identisch zur Dicke des zweiten Schenkels 16, aber auch dies kann vom Fachmann nach Belieben modifiziert werden. Die Schenkel 16, 17 sind hier als schmale, quaderförmige Leisten ausgebildet, jeder von ihnen kann aber auch einen anderen Querschnitt, z.B. einen kegelförmigen Querschnitt, aufweisen.

Die Seitenfläche 6 des Stütz- und Isolierelements 1, die zur Abstützung des Fensterrahmens 34 dient, liegt immer im Bereich des zweiten Schenkels 16, ist aber als Seitenfläche des Isolierteils 4 ausgestaltet. Mit anderen Worten liegt der Fensterrahmen 34 niemals direkt auf dem zweiten Schenkel 16 des Stützteils 2 auf, sondern es liegt immer zumindest ein Abschnitt des Isolierteils 4 dazwischen. Gegebenenfalls kann zwischen Isolierteil 4 und Fensterrahmen 34 noch weiteres Isolier- oder Dämmmaterial eingebracht sein. Die Lastabtragung erfolgt immer in erster Linie über den zweiten Schenkel 16 des Stützteils 2. Dazu ist der Fensterrahmen 34 durch das Isolierteil 4 hindurch mit dem Stützteil 2 verschraubt (Näheres hierzu weiter unten unter Bezugnahme auf Fig. 7).

Das Isolierteil 4 ist aus Hartschaum oder aus verdichteter Mineralwolle gebildet. In der Regel sind derartige Materialien selbsttragend, können aber keine Last abtragen. Beispiele derartiger Materialien sind Polystyrol, Polyurethan, Holzschäume, etc. mit Raumgewichten < 100 kg/m³, vorzugsweise < 50 kg/m³, die als Wärmedämmstoffe gelten, jedoch noch keine so große statische Aufgabe übernehmen können wie ähnliche Hartschäume mit Volumengewichten > 100 kg/m³ oder sogar > 200 kg/m³. Vorzugsweise ist das Isolierteil 4 luftdicht.

Das Isolierteil 4 ist mit dem Stützteil 2 verbunden und zumindest an der der ersten Seitenfläche 9 abgewandten Seite des ersten Schenkels 10 des Stützteils 2 angeordnet. Das Isolierteil 4 ist in der dargestellten Ausführungsform einstückig. Das Isolierteil 4 weist zwei Einschnitte 30 auf, in die der zweite Schenkel 16 und der dritte Schenkel 17 des Stützteils eingeführt sind. Somit umgibt das Isolierteil 4 sowohl den zweiten Schenkel 16 als auch den dritten Schenkel 17 des Stützteils 2 an jeweils drei Seiten.

In der in Fig. 3 dargestellten Einbausituation kann das Isolierteil 4 zusätzlich mittels Klebeverbindungen 24 mit der Wand 8 verklebt sein. Außerdem kann das Isolierteil 4 auch im Bereich des ersten Schenkels 10 und/oder des zweiten Schenkels 16 und/oder des dritten Schenkels 17 mit dem Stützteil 2 verklebt sein. Die Verklebung kann jeweils vollflächig oder abschnittsweise erfolgen. Dies gilt auch für die Klebeverbindung 24 zwischen Isolierteil 4 und Wand 8.

An dem zweiten Schenkel 16 und/oder dem dritten Schenkel 17 des Stützteils 2 können Widerhaken 25 ausgebildet sein, die für eine Fixierung des Isolierteils 4 am Stützteil 2 sorgen.

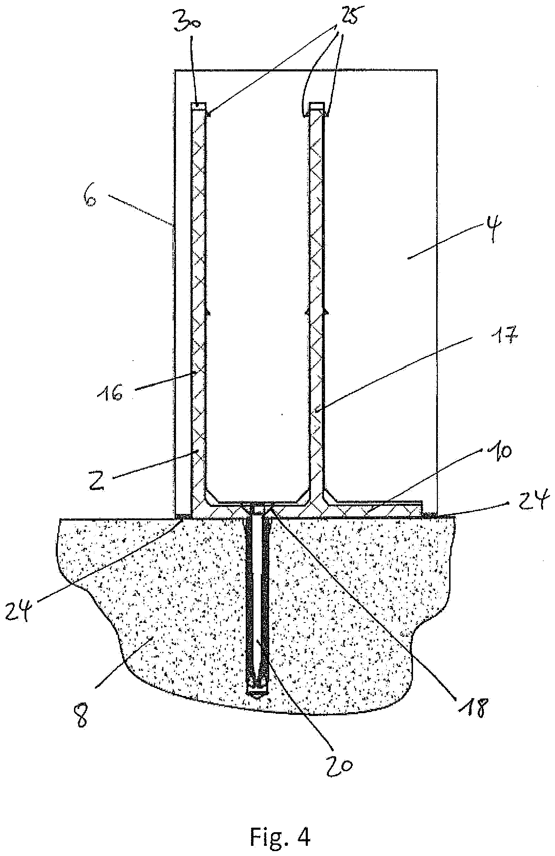

Im Rahmen der Erfindung sind verschiedene Modifikationen des Stütz- und Isolierelements 1 möglich. Einige davon sind in den Fig. 4 bis 7 dargestellt.

Die Ausführungsform gemäß Fig. 4 unterscheidet sich von der Ausführungsform aus Fig. 3 dadurch, dass der zweite Schenkel 16 und der dritte Schenkel 17 des Stützteils 2 länger ausgebildet sind. Außerdem ist der erste Schenkel 10 des Stützteils 2 ebenfalls länger ausgebildet und erstreckt sich somit über den zweiten Schenkel 16 hinaus, wodurch eine von der U-Form abweichende Winkelform erzielt wird, die zwei aneinandergesetzten L gleicht.

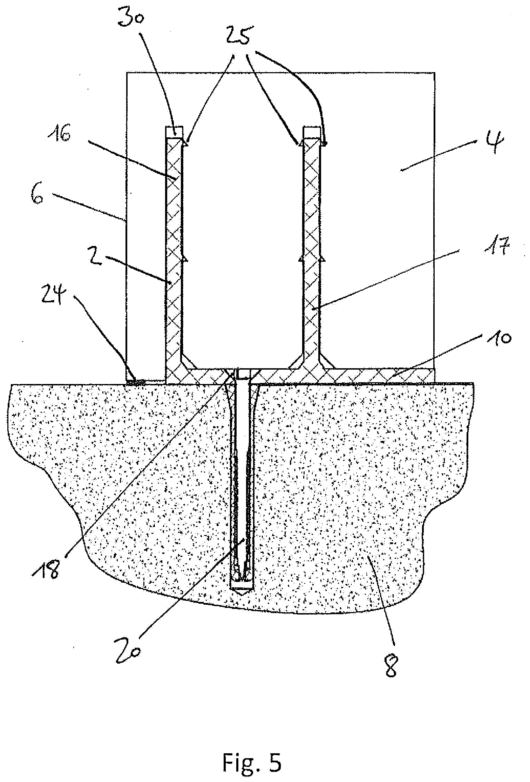

Die in Fig. 5 dargestellte Ausführungsform unterscheidet sich von der Ausführungsform aus Fig. 4 darin, dass der zweite Schenkel 16 und der dritte Schenkel 17 des Stützteils 2 kürzer ausgebildet sind und das Isolierteil 4 nur auf einer Seite des Stützteils 2 einen direkten Kontakt mit der Wand 8 besitzt. Auf der anderen Seite des Stützteils 2 liegt das Isolierteil 4 auf dem ersten Schenkel 10 des Stützteils 2 auf.

Die in Fig. 6 und 7 dargestellte Ausführungsform des Stütz- und Isolierelements 1 beinhaltet zwei L-förmige Winkelelemente 37, 38, die aufeinander gesetzt werden und mittels eines Befestigungselements 20 miteinander und mit der Wand 8 verbunden sind. Die Winkelelemente 37, 38 sind vorzugsweise aus Metall, besonders bevorzugt aus Stahl oder Aluminium. Das erste Winkelelement 37 bildet dabei den ersten Schenkel 10 und den zweiten Schenkel 16 des Stützteils 2, während das Winkelelement 38 den dritten Schenkel 17 sowie einen vierten Schenkel 19 des Stützteils 2 umfasst. Der vierte Schenkel 19 ist parallel zum ersten Schenkel 10 angeordnet, aber kürzer ausgestaltet. Das Befestigungselement 20 ragt im Einbauzustand sowohl durch den vierten Schenkel 19 als auch den ersten Schenkel 10 des Stützteils 2.

Im Knickbereich zwischen dem ersten Schenkel 10 und dem zweiten Schenkel 16 kann mindestens eine Versteifungsrippe 33 angeordnet sein. Form und Ausgestaltung der Versteifungsrippe 33 sind für den Fachmann variierbar. Auch andere Versteifungsmaßnahmen können hilfreich sein (beispielsweise durch Materialkrümmung).

Um einen größeren Abstand von der Wand 8 zu erzielen, kann im Bereich der ersten Seitenfläche 9 des ersten Schenkels 10 ein Stützblock 5 angeordnet sein, der im Einbauzustand (Fig. 7) zwischen erstem Schenkel 10 des Stützteils 2 und Wand 8 angeordnet ist. Der Stützblock 5 ist Teil des Stützteils 2 und wird von den Befestigungselementen 20 vollständig durchdrungen. Der Stützblock 5 ist aus einem Last tragenden Material gebildet, vorzugsweise besteht er aus einem Last tragenden Hartschaummaterial mit einem Volumengewicht > 100 kg/m³, bevorzugt > 200 kg/m³. Ein derartiger Hartschaum ist beispielsweise unter der Bezeichnung "Purenit" oder "Compacfoam" bekannt. Es ist bevorzugt, dass das Isolierteil 4 auch den Stützblock 5 seitlich umgibt und besonders bevorzugt sich bis zur Wand 8 erstreckt.

Wie aus Fig. 7 ersichtlich ist, ist der Fensterrahmen 34 im Einbauzustand mit dem zweiten Schenkel 16 und dem dritten Schenkel 17 des Stützteils 2 verschraubt. Im vorliegenden Fall dient in erster Linie der zweite Schenkel 16 zur Lastabtragung über das mindestens eine Befestigungselement 20 unter Zwischenschaltung des Stützblocks 5, während der dritte Schenkel 17 maßgeblich dazu dient, ein Verkippen des Schraubelements 35 durch Fixierung an einer zweiten Stelle zu verhindern.

Die Stützblöcke 5 können in nahezu allen beliebigen Ausgestaltungen verwendet werden. Sie können auch bei den in Fig. 3 bis 5 dargestellten Ausführungsformen des Stützteils hinzugefügt werden.

Die Darstellung in Fig. 6 zeigt schematisch außerdem den weiter oben bereits geschilderten Sachverhalt, dass die Stütz- und Isolierelemente 1 lediglich abschnittsweise im Umfangsbereich des Fensterrahmens 34 vorhanden sind und dort punktuell für dessen Lastabtragung verantwortlich sind, während in den Zwischenbereichen Füllelemente 39 eingefügt sind. In der Ausgestaltung gemäß Fig. 6 sind die Füllelemente 39 derart gestaltet, dass sie eine der Form des Stützteils 2 annähernd entsprechende Form aufweisen, sodass ein identisch geformtes Isolierteil 4 sowohl über das Stützteil 2 als auch über das Füllelement 39 gestülpt werden kann. Im vorliegenden Beispielsfall sind lediglich die abstehenden Schenkel des Stützteils 2 beim Füllelement 39 nicht nachgebildet worden.

Das Füllelement 39 ist vorzugsweise aus demselben Material gebildet wie das Isolierteil 4. Die Füllelemente 39 sind vorzugsweise mit der Wand 8 verklebt und können ebenso mit dem Stützteil 2 verklebt sein. Das Isolierteil 4 ist ebenfalls in den Bereichen der Überdeckung vorzugsweise mit den Füllelementen 39 verklebt.

Alle beschriebenen Einzelheiten können jeweils bei den verschiedenen dargestellten Ausführungsformen ausgetauscht und verändert werden.

Die konkrete geometrische Ausbildung des Stützteils 2 ist variabel, solange ein erster Schenkel 10 und zwei weitere davon senkrecht abragende parallele Schenkel 16, 17 vorliegen, wobei die beiden Schenkel 16, 17 beabstandet zueinander sein müssen. Zusätzlich kann das Isolierteil 4 auch aus mehreren Teilen zusammengesetzt sein.

Alle in Fig. 3 bis 7 dargestellten Ausführungsformen können auch jeweils spiegelbildlich eingebaut sein, d. h. die Seitenfläche 6, die zur Abstützung des Fensterrahmens 34 dient, kann auch jeweils an der gegenüberliegenden Seite des Isolierteils 4 angeordnet sein. Unter Umständen muss dann die Bezeichnung des zweiten Schenkels 16 und des dritten Schenkels 17 des Stützteils 2 vertauscht werden.

Schließlich sind auch die Zahl und räumliche Anordnung der Befestigungselemente 20 und Schraubelemente 35 für den Fachmann je nach Anwendungsbereich frei wählbar.

Bezug nehmend auf Fig. 3 bis 7 wird nun ein bevorzugtes Verfahren zur Anordnung eines Fensterrahmens 34 an einer Wand 8 eines Bauwerksabschnitts 28 beschrieben. Zunächst wird das Stützteil 2, konkret zumindest der erste Schenkel 10, mittels Befestigungselementen 20 an der Wand 8 verschraubt. Zusätzlich kann eine Klebeverbindung zwischen Stützteil 2 und Wand 8 erfolgen.

Anschließend wird das Isolierteil 4 derart auf das Stützteil 2 aufgesetzt, dass der zweite Schenkel 16 und der dritte Schenkel 17 des Stützteils 2 in die zugehörigen Einschnitte 30 des Isolierteils 4 eindringen. Das Isolierteil 4 wird dabei in der Regel so weit vorgeschoben, bis es die Wand 8 bzw. den ersten Schenkel 10 des Stützteils 2 berührt. Unter Umständen können zusätzliche Klebeverbindungen 24 zwischen Isolierteil 4 und Wand 8 hergestellt werden, ebenso kann eine Klebeverbindung zwischen dem Isolierteil 4 und dem Stützteil 2 für einen sicheren Zusammenhalt des Stütz- und Isolierelements 1 sorgen. In der Regel überdeckt das Isolierteil 4 somit auch die Befestigungselemente 20. Im aufgesteckten Zustand umgibt somit das Isolierteil 4 den zweiten Schenkel 16 und den dritten Schenkel 17 des Stützteils 2 jeweils an drei Seiten.

Anschließend erfolgt das Verschrauben des Fensterrahmens 34 unter Zwischenschaltung zumindest eines Abschnitts des Isolierteils 4 mit dem zweiten Schenkel 16 und dem dritten Schenkel 17 des Stützteils 2 des Stütz- und Isolierelements 1.

In allen Ausführungsformen ist es auch denkbar, dass das Isolierteil 4 den zweiten Schenkel 16 und/oder dritten Schenkel 17 des Stützteils 2 an einer oder an mehreren Seiten nur teilweise, aber nicht vollständig umgibt.

Ebenso können in der Einbausituation zusätzliche Isoliermaterialien zur Isolierung verwendet werden.

Alle genannten Klebeverbindungen werden bevorzugt auf zumindest eines der beiden zu verbindenden Teile aufgebracht, vorzugsweise als Kleberaupe, bevor die Zusammenfügung erfolgt. Alternativ können auch vorhandene Lücken oder Kanäle nachträglich, z.B. mit PU-Schaum, gefüllt werden. Theoretisch ist es sogar möglich, ein komplettes Isolierteil 4 durch Ausschäumen einer Form, die um das an der Wand 8 befestigte Stützteil 2 herum angeordnet wird, vor Ort herzustellen.

## Patentansprüche

1. Bauwerksabschnitt (28) mit
einer Wand (8),
einem Fensterrahmen (34), und
mindestens einem seitlich von der Wand (8) angeordneten Stütz- und Isolierelement (1) zur Abstützung und Isolierung des Fensterrahmens (34), wobei das Stütz- und Isolierelement (1) umfasst:
ein Stützteil (2) mit einem ersten Schenkel (10), der eine erste Seitenfläche (9) aufweist, mit einem zweiten Schenkel (16), der auf der der ersten Seitenfläche (9) gegenüberliegenden Seite vom ersten Schenkel (10) abragt, und einem dritten Schenkel (17), der, beabstandet vom zweiten Schenkel (16), auf der der ersten Seitenfläche (9) gegenüberliegenden Seite vom ersten Schenkel (10) abragt, wobei das Stützteil (2) aus einem tragfähigen Material gebildet ist,
ein Isolierteil (4), das zumindest an der der ersten Seitenfläche (9) abgewandten Seite des ersten Schenkels (10) des Stützteils (2) angeordnet ist und aus verdichteter Mineralwolle oder aus einem Hartschaum gebildet ist,
wobei das Isolierteil (4) zwei Einschnitte (30) aufweist, in die der zweite Schenkel (16) und dritte Schenkel (17) des Stützteils (2) eingeführt sind, und wobei das Isolierteil (4) den zweiten Schenkel (16) und den dritten Schenkel (17) des Stützteils (2) jeweils an drei Seiten umgibt,
wobei der erste Schenkel (10) des Stützteils (2) mittels mindestens eines Befestigungselements (20) mit der Wand (8) verschraubt ist,
**dadurch gekennzeichnet, dass**
der Fensterrahmen (34) unter Zwischenschaltung zumindest eines Abschnitts des Isolierteils (4) mit dem zweiten Schenkel (16) und dem dritten Schenkel (17) des Stützteils (2) des mindestens einen Stütz- und Isolierelements (1) mittels mindestens eines Schraubelements (35) verschraubt ist.

2. Bauwerksabschnitt (28) nach Anspruch 1, **dadurch gekennzeichnet, dass** das Isolierteil (4) den zweiten Schenkel (16) und den dritten Schenkel (17) des Stützteils (2) an den drei Seiten jeweils im Wesentlichen vollständig umgibt.

3. Bauwerksabschnitt (28) nach einem der vorangehenden Ansprüche, **dadurch gekennzeichnet, dass** das Isolierteil (4) einstückig ist.

4. Bauwerksabschnitt (28) nach einem der vorangehenden Ansprüche, **dadurch gekennzeichnet, dass** zumindest der erste (10) und zweite (16) Schenkel des Stützteils (2) aus Metall, vorzugsweise aus Stahl oder Aluminium, gebildet sind.

5. Bauwerksabschnitt (28) nach einem der vorangehenden Ansprüche, **dadurch gekennzeichnet, dass** der dritte Schenkel (17) aus Metall, vorzugsweise aus Stahl oder Aluminium, gebildet ist.

6. Bauwerksabschnitt (28) nach einem der vorangehenden Ansprüche, **dadurch gekennzeichnet, dass** der zweite (16) und dritte (17) Schenkel des Stützteils (2) eine Dicke im Bereich von 0,5 bis 20 mm, vorzugsweise von 1 bis 15 mm, aufweisen.

7. Bauwerksabschnitt (28) nach einem der vorangehenden Ansprüche, **dadurch gekennzeichnet, dass** der zweite Schenkel (16) unter einem rechten Winkel vom ersten Schenkel (10) abragt, und dass der dritte Schenkel (17) parallel zum zweiten Schenkel (16) vom ersten Schenkel (10) abragt.

8. Bauwerksabschnitt (28) nach einem der vorangehenden Ansprüche, **dadurch gekennzeichnet, dass** das Isolierteil (4) auf den zweiten (16) und dritten (17) Schenkel des Stützteils (2) aufgesteckt ist.

9. Bauwerksabschnitt (28) nach einem der vorangehenden Ansprüche, **dadurch gekennzeichnet, dass** das Stützteil (2) weiterhin einen Stützblock (5) aufweist, der im Bereich der ersten Seitenfläche (9) angeordnet ist und zur Anlage an der Wand (8) dient.

10. Verfahren zur Anordnung eines Fensterrahmens (34) an einer Wand (8) eines Bauwerksabschnitts (28), mit folgenden Schritten:
- Bereitstellen mindestens eines Stützteils (2) und mindestens eines Isolierteils (4), wobei das mindestens eine Stützteil (2) einen ersten Schenkel (10), der eine erste Seitenfläche (9) aufweist, einen zweiten Schenkel (16), der auf der der ersten Seitenfläche (9) gegenüberliegenden Seite vom ersten Schenkel (10) abragt, und einen dritten Schenkel (17), der, beabstandet vom zweiten Schenkel (16), auf der der ersten Seitenfläche (9) gegenüberliegenden Seite vom ersten Schenkel (10) abragt, aufweist, wobei das mindestens eine Stützteil (2) aus einem tragfähigen Material gebildet ist, wobei das Isolierteil (4) aus verdichteter Mineralwolle oder aus einem Hartschaum gebildet ist, und wobei das mindestens eine Isolierteil (4) zwei Einschnitte (30) aufweist,
- Verschrauben des ersten Schenkels (10) des mindestens einen Stützteils (2) an der Wand (8) mittels mindestens eines Befestigungselements (20),
- Aufsetzen des mindestens einen Isolierteils (4) auf das mindestens eine Stützteil (2) derart, dass der zweite (16) und dritte (17) Schenkel des mindestens einen Stützteils (2) in die zwei Einschnitte (30) des mindestens einen Isolierteils (4) eindringen, sodass das mindestens eine Isolierteil (4) zumindest an der der ersten Seitenfläche (9) abgewandten Seite des ersten Schenkels (10) des mindestens einen Stützteils (2) angeordnet ist und den zweiten (16) und dritten (17) Schenkel des mindestens einen Stützteils (2) jeweils an drei Seiten umgibt, und
- Verschrauben des Fensterrahmens (34) unter Zwischenschaltung zumindest eines Abschnitts des Isolierteils (4) mit dem zweiten Schenkel (16) und dem dritten Schenkel (17) des Stützteils (2) des mindestens einen Stütz- und Isolierelements (1).

11. Verfahren nach Anspruch 10, **dadurch gekennzeichnet, dass** das mindestens eine Isolierteil (4) mit dem mindestens einen Stützteil (2) verklebt wird.

12. Verfahren nach Anspruch 10 oder 11, **dadurch gekennzeichnet, dass** das mindestens eine Isolierteil (4) mit der Wand (8) verklebt wird.

## Claims

1. Building structure portion (28) having
a wall (8),
a window frame (34), and
at least one supporting and insulating element (1), which is arranged laterally from the wall (8), for supporting and insulating the window frame (34), wherein the supporting and insulating element (1) comprises:
a supporting part (2) having a first leg (10), which has a first lateral surface (9), having a second leg (16), which projects from the first leg (10) on the side opposite the first lateral surface (9), and having a third leg (17), which, while being spaced apart from the second leg (16), projects from the first leg (10) on the side opposite the first lateral surface (9), wherein the supporting part (2) is formed from a load-bearing material,
an insulating part (4) which is arranged at least on the side, which faces away from the first lateral surface (9), of the first leg (10) of the supporting part (2) and is formed from compacting mineral wool or from a hard foam,
wherein the insulating part (4) has two incisions (30) into which the second leg (16) and third leg (17) of the supporting part (2) are inserted, and wherein the insulating part (4) surrounds the second leg (16) and the third leg (17) of the supporting part (2) on three sides in each case,
wherein the first leg (10) of the supporting part (2) is screwed to the wall (8) by means of a fastening element (20),
**characterized in that**
the window frame (34), with interposition of at least one portion of the insulating part (4), is screwed to the second leg (16) and the third leg (17) of the supporting part (2) of the at least one supporting and insulating element (1) by means of at least one screw element (35).

2. Building structure portion (28) according to Claim 1, **characterized in that** the insulating part (4) in each case substantially completely surrounds the second leg (16) and the third leg (17) of the supporting part (2) on the three sides.

3. Building structure portion (28) according to either of the preceding claims, **characterized in that** the insulating part (4) is in one piece.

4. Building structure portion (28) according to one of the preceding claims, **characterized in that** at least the first (10) and the second (16) leg of the supporting part (2) are formed from metal, preferably from steel or aluminium.

5. Building structure portion (28) according to one of the preceding claims, **characterized in that** the third leg (17) is formed from metal, preferably from steel or aluminium.

6. Building structure portion (28) according to one of the preceding claims, **characterized in that** the second (16) and third (17) legs of the supporting part (2) have a thickness in the range from 0.5 to 20 mm, preferably from 1 to 15 mm.

7. Building structure portion (28) according to one of the preceding claims, **characterized in that** the second leg (16) projects from the first leg (10) at a right angle, and **in that** the third leg (17) projects parallel to the second leg (16) from the first leg (10).

8. Building structure portion (28) according to one of the preceding claims, **characterized in that** the insulating part (4) is plugged onto the second (16) and third (17) leg of the supporting part (2).

9. Building structure portion (28) according to one of the preceding claims, **characterized in that** the supporting part (2) further has a supporting block (5) which is arranged in the region of the first lateral surface (9) and serves for bearing against the wall (8).

10. Method for arranging a window frame (34) on a wall (8) of a building structure portion (28), comprising the following steps:
- providing at least one supporting part (2) and at least one insulating part (4), wherein the at least one supporting part (2) has a first leg (10), which has a first lateral surface (9), a second leg (16), which projects from the first leg (10) on the side opposite the first lateral surface (9), and a third leg (17), which, while being spaced apart from the second leg (16), projects from the first leg (10) on the side opposite the first lateral surface (9), wherein the at least one supporting part (2) is formed from a load-bearing material, wherein the insulating part (4) is formed from compacted mineral wool or from a hard foam, and wherein the at least one insulating part (4) has two incisions (30),
- screwing the first leg (10) of the at least one supporting part (2) to the wall (8) by means of at least one fastening element (20),
- placing the at least one insulating part (4) on the at least one supporting part (2) in such a way that the second (16) and third (17) leg of the at least one supporting part (2) penetrate into the incisions (30) of the at least one insulating part (4), with the result that the at least one insulating part (4) is arranged at least on the side, which faces away from the first lateral surface (9), of the first leg (10) of the at least one supporting part (2) and surrounds the second (16) and third (17) leg of the at least one supporting part (2) on three sides in each case, and
- screwing the window frame (34), with interposition of at least one portion of the insulating part (4), to the second leg (16) and the third leg (17) of the supporting part (2) of the at least one supporting and insulating element (1) .

11. Method according to Claim 10, **characterized in that** the at least one insulating part (4) is adhesively bonded to the at least one supporting part (2).

12. Method according to Claim 10 or 11, **characterized in that** the at least one insulating part (4) is adhesively bonded to the wall (8).

## Revendications

1. Section de construction (28) avec
un mur (8),
un cadre de fenêtre (34), et
au moins un élément de soutien et d'isolation (1) disposé de manière latérale par rapport au mur (8), pour le soutien et l'isolation du cadre de fenêtre (34), dans laquelle l'élément de soutien et d'isolation (1) comprend :
une partie de soutien (2) avec une première branche (10), qui présente une première face latérale (9), avec une deuxième branche (16), qui dépasse de la première branche (10) sur le côté faisant face à la première face latérale (9), et une troisième branche (17), qui dépasse de la première branche (10) sur le côté faisant face à la première face latérale (9) à distance de la deuxième branche (16), dans laquelle la partie de soutien (2) est formée à partir d'un matériau solide,
une partie d'isolation (4), qui est disposée au moins au niveau du côté, opposé à la première face latérale (9), de la première branche (10) de la partie de soutien (2) et est formée à partir de laine minérale compactée ou à partir d'une mousse dure,
dans laquelle la partie d'isolation (4) présente deux incisions (30), dans lesquelles la deuxième branche (16) et la troisième branche (17) de la partie de soutien (2) sont introduites, et dans laquelle la partie d'isolation (4) entoure respectivement au niveau de trois côtés la deuxième branche (16) et la troisième branche (17) de la partie de soutien (2),
dans laquelle la première branche (10) de la partie de soutien (2) est vissée au mur (8) au moyen d'au moins un élément de fixation (20),
**caractérisée en ce que**
le cadre de fenêtre (34) est vissé en intercalant au moins une section de la partie d'isolation (4) à la deuxième branche (16) et à la troisième branche (17) de la partie de soutien (2) de l'au moins un élément de soutien et d'isolation (1) au moyen d'au moins un élément de vissage (35) .

2. Section de construction (28) selon la revendication 1, **caractérisée en ce que** la partie d'isolation (4) entoure respectivement sensiblement totalement la deuxième branche (16) et la troisième branche (17) de la partie de soutien (2) au niveau des trois côtés.

3. Section de construction (28) selon l'une quelconque des revendications précédentes, **caractérisée en ce que** la partie d'isolation (4) est d'un seul tenant.

4. Section de construction (28) selon l'une quelconque des revendications précédentes, **caractérisée en ce qu'**au moins la première (10) et la deuxième (16) branche de la partie de soutien (2) sont formées à partir de métal, de préférence à partir d'acier ou d'aluminium.

5. Section de construction (28) selon l'une quelconque des revendications précédentes, **caractérisée en ce que** la troisième branche (17) est formée à partir de métal, de préférence à partir d'acier ou d'aluminium.

6. Section de construction (28) selon l'une quelconque des revendications précédentes, **caractérisée en ce que** la deuxième (16) et la troisième (17) branche de la partie de soutien (2) présentent une épaisseur dans la plage de 0,5 à 20 mm, de préférence de 1 à 15 mm.

7. Section de construction (28) selon l'une quelconque des revendications précédentes, **caractérisée en ce que** la deuxième branche (16) dépasse de la première branche (10) selon un angle droit, et que la troisième branche (17) dépasse de la première branche (10) de manière parallèle par rapport à la deuxième branche (16).

8. Section de construction (28) selon l'une quelconque des revendications précédentes, **caractérisée en ce que** la partie d'isolation (4) est enfichée sur la deuxième (16) et la troisième (17) branche de la partie de soutien (2).

9. Section de construction (28) selon l'une quelconque des revendications précédentes, **caractérisée en ce que** la partie de soutien (2) présente par ailleurs un bloc de soutien (5), qui est disposé dans la zone de la première face latérale (9) et sert à l'appui au niveau du mur (8).

10. Procédé pour agencer un cadre de fenêtre (34) au niveau d'un mur (8) d'une section de construction (28), avec des étapes suivantes :
- de fourniture d'au moins une partie de soutien (2) et d'au moins une partie d'isolation (4), dans lequel l'au moins une partie de soutien (2) présente une première branche (10), qui présente une première face latérale (9), une deuxième branche (16), qui dépasse de la première branche (10) sur le côté faisant face à la première face latérale (9), et une troisième branche (17), qui dépasse de la première branche (10) sur le côté faisant face à la première face latérale (9) à distance de la deuxième branche (16), dans lequel l'au moins une partie de soutien (2) est formée à partir d'un matériau solide, dans lequel la partie d'isolation (4) est formée à partir de laine minérale compactée ou à partir d'une mousse dure, et dans lequel l'au moins une partie d'isolation (4) présente deux incisions (30),
- de vissage de la première branche (10) de l'au moins une partie de soutien (2) au niveau du mur (8) au moyen d'au moins un élément de fixation (20),
- de placement de l'au moins une partie d'isolation (4) sur l'au moins une partie de soutien (2) de telle manière que la deuxième (16) et la troisième (17) branche de l'au moins une partie de soutien (2) entrent dans les deux incisions (30) de l'au moins une partie d'isolation (4) de telle sorte que l'au moins une partie d'isolation (4) est disposée au moins au niveau du côté, opposé à la première face latérale (9), de la première branche (10) de l'au moins une partie de soutien (2) et entoure la deuxième (16) et la troisième (17) branche de l'au moins une partie de soutien (2) respectivement au niveau de trois côtés, et
- de vissage du cadre de fenêtre (34) en intercalant au moins une section de la partie d'isolation (4) à la deuxième branche (16) et à la troisième branche (17) de la partie de soutien (2) de l'au moins un élément de soutien et d'isolation (1).

11. Procédé selon la revendication 10, **caractérisé en ce que** l'au moins une partie d'isolation (4) est collée à l'au moins une partie de soutien (2).

12. Procédé selon la revendication 10 ou 11, **caractérisé en ce que** l'au moins une partie d'isolation (4) est collée au mur (8).
